# EUROPEAN PATENT SPECIFICATION

(11) **EP 4 542 764 B1**
(45) Date of publication and mention of the grant of the patent: **25.11.2026**
(21) Application number: 24718311.4
(22) Date of filing: 07.02.2024
(51) Int. Cl.: H01M 50/636, H01M 50/15, H01M 50/147, H01M 50/162, H01M 50/164, H01M 50/342, H01M 50/627, H01M 50/645

(54) **CELL TOP CAP**
ZELLENOBERKAPPE
CAPUCHON SUPÉRIEUR DE CELLULE

(30) Priority: 01.09.2023 CN 202311125848; 01.09.2023 CN 202322384889 U; 01.09.2023 CN 202311126512
(43) Date of publication of application: 23.04.2025
(73) Proprietor: Jinko Energy Storage Technology Co., Ltd., Jiaxing, Zhejiang 314415 (CN)
(72) Inventor: LIANG, Yadong, Jiaxing, Zhejiang 314415 (CN)
(74) Representative: Balder IP Law, S.L.
(86) International application number: PCT/CN2024/076735
(87) International publication number: WO 2025/044069

(56) References cited:
- CN-A- 114 725 593
- CN-A- 116 454 494
- CN-A- 117 039 365
- CN-U- 215 266 476
- CN-U- 215 418 522
- CN-U- 217 158 533
- CN-U- 219 180 634
- CN-U- 219 498 140
- JP-A- 2021 086 699
- KR-A- 20230 089 960
- US-A1- 2022 320 642

## Description

### TECHNICAL FIELD

Embodiments of the present disclosure relate to the technical field of batteries, and in particular, relate to a top cap of a battery cell.

### BACKGROUND

At present, a top cap of an energy storage battery on the market includes structures such as a post, an aluminum sheet, a bottom plastic structure, and the like. A hole is arranged, at the same height, in both the aluminum sheet and the bottom plastic structure to form a liquid injection hole, and a sealing rivet is arranged over the liquid injection hole. The conventional liquid injection hole is in a straight cylindrical shape, and upon injection of electrolyte into the battery cell, a liquid injection speed through the liquid injection hole is slowed down and thus the time for liquid injection is long. Furthermore, it is necessary to vacuumize and exhaust the gas inside the battery cell before liquid injection, such that a negative pressure is formed inside the battery cell. Upon completion of liquid injection and mounting of the sealing rivet at the liquid injection hole, the sealing rivet is easily pressed into the inside of the battery cell due to the negative pressure, thereby affecting sealing performance at the liquid injection hole. In this way, the electrolyte flows out through the liquid injection hole, resulting in serious liquid leakage.

Therefore, the bottom plastic structure of the top cap of the battery cell is subject to the problems of low liquid injection speed and aptness of liquid leakage.

CN114725593A1 discloses a battery cover with a liquid-injection and flowguiding structure, which includes light aluminum plates and insulating pads distributed up and down

CN116454494A1 discloses a lower plastic comprising a body provided with a first liquid injection sub-hole used for passing the electrolyte and a deflector assembly arranged on one side of the body.

US2022320642A1 discloses an end cover assembly for a battery cell. The end cover assembly includes an end cover provided with an injection hole, an insulating part, a blocking part and a separating part.

### SUMMARY

The invention is set out in the appended set of claims.

The present disclosure provides a top cap of a battery cell, including an aluminum sheet and a bottom plastic structure. A top side of the bottom plastic structure is arranged on a bottom side of the aluminum sheet. The bottom plastic structure includes a first plate, a second plate, and an intermediate protrusion disposed between the first plate and the second plate, and the intermediate protrusion is protruded with respect to a bottom side of the first plate and a bottom side of the second plate. The first plate is provided with a first post hole, and the second plate is provided with a first liquid injection hole, a second post hole and a stop portion. The stop portion is disposed at the bottom side of the second plate, protrudes from a circumferential side of the first liquid injection hole, and is of a hollowed-out structure. An area of a hollowed-out region of the stop portion is greater than an area of a cross-section of the first liquid injection hole. The stop portion includes a side surface and a bottom surface, the side surface is in contact with the bottom side of the second plate and surrounds a circumference of the first liquid injection hole, and the side surface extends along a direction away from the second plate and is in connection with the bottom surface. A plurality of diverging holes are provided on the side surface and are uniformly spaced apart from each other along a circumference of the stop portion, and a total area of the plurality of diverging holes is greater than the area of the cross-section of the first liquid injection hole.

In some embodiments, the first plate and the second plate is provided with side-end protrusions on two opposite sides of the first plate and the second plate, respectively, one of the side-end protrusions is protruded from the bottom side of the first plate and another of the side-end protrusions is protruded from the bottom side of the second plate, and each of the side-end protrusions is provided with a plurality of holes.

In some embodiments, each of the side-end protrusions is of a frame structure, and is provided with a plurality of reinforcement ribs extending along a lengthwise direction of the bottom plastic structure.

In some embodiments, the top cap further includes a sealing rivet. The aluminum sheet is provided with a second liquid injection hole having a same central axis as the first liquid injection hole, the sealing rivet is inserted into the second liquid injection hole, and a gap between a bottom end of the sealing rivet and a bottom of the stop portion is set in a range of 0.5 mm to 2 mm.

In some embodiments, the second liquid injection hole is a stepped hole including a first hole section and a second hole section, the first hole section has a radial dimension greater than a radial dimension of the second hole section, and the second hole section is closer to the first liquid injection hole than the first hole section.

In some embodiments, the top cap further includes an explosion-proof valve. The intermediate protrusion is provided with a plurality of vent holes, the explosion-proof valve is mounted on a back surface of the intermediate protrusion, and is directly aligned with the plurality of vent holes. In some embodiments, the intermediate protrusion is rectangular, each of the plurality of vent holes is strip-shaped and extends along the widthwise direction Y of the bottom plastic structure, and the plurality of vent holes are uniformly spaced apart from each other.

In some embodiments, the top cap further includes catch slots, respectively disposed at two sides of the intermediate protrusion that connect the first plate and the second plate. The explosion-proof valve is clamped into the catch slots, and each of the catch slot has a depression depth less than a protrusion height of the intermediate protrusion.

In some embodiments, the plurality of diverging holes are in the shape of a trapezoid, rectangle, triangle depending on the shape of the side surface.

In some embodiments, the plurality of diverging holes are trapezoidal holes and the stop portion is bowl-shaped.

In some embodiments, the depression depth of the catch slot is equal to the thickness of the explosion-proof valve.

In some embodiments, the catch slots are arranged at a middle position of the intermediate protrusion along the widthwise direction Y of the bottom plastic structure.

In some embodiments, the catch slots are arranged at positions close to the two sides of the intermediate protrusion along the widthwise direction Y of the bottom plastic structure.

In some embodiments, a plurality of vent holes is disposed in the intermediate protrusion and are uniformly spaced apart from each other.

In some embodiments, the size of the vent hole along a lengthwise direction X of the bottom plastic structure is less than the size of a rupture disc of the explosion-proof valve.

In some embodiments, the explosion-proof valve further includes a recessed portion.

In some embodiments, the recessed portion is disposed in a central region of the rupture disc, and is recessed from an upper surface to the lower surface of the explosion-proof valve, and an internal platform is arranged around an outer circumference of the recessed portion.

Some embodiments of the present disclosure provide a battery cell, comprising: the top cap as mentioned above; and a housing. The top cap is mounted on a top of the housing.

### BRIEF DESCRIPTION OF THE DRAWINGS

One or more embodiments are illustrated by way of example with reference to the figures in the accompanying drawings, these exemplary illustrations do not constitute a limitation to the embodiments, and elements having the same reference sign in the accompanying drawings are indicated to be similar, and the figures in the accompanying drawings do not constitute a limitation of scale, unless specifically stated.
FIG. 1 is a schematic diagram illustrating a structure of a bottom plastic structure of a top cap of a battery cell in accordance with some embodiments of the present disclosure.
FIG. 2 is a schematic diagram illustrating a top view of a bottom plastic structure of a top cap of a battery cell in accordance with some embodiments of the present disclosure.
FIG. 3 is a schematic diagram illustrating a cross-sectional structure in FIG. 1.
FIG. 4 is a schematic diagram illustrating a cross-sectional structure of a bottom plastic structure and an aluminum sheet of a top cap of a battery cell in accordance with some embodiments of the present disclosure.
FIG. 5 is an exploded view of a top cap of a battery cell in accordance with some embodiments of the present disclosure.
FIG. 6 is a schematic assembly diagram of a top cap of a battery cell in accordance with some embodiments of the present disclosure.
FIG. 7 is a schematic diagram illustrating an assembled structure of a top cap of a battery cell in accordance with some embodiments of the present disclosure.
FIG. 8 is a schematic diagram illustrating a three-dimensional half-sectional view of an aluminum sheet in accordance with some embodiments of the present disclosure.
FIG. 9 is a schematic structural diagram of an explosion-proof valve in accordance with some embodiments of the present disclosure.
FIG. 10 is a schematic structural diagram of another explosion-proof valve in accordance with some embodiments of the present disclosure.
FIG. 11 is a schematic structural diagram of a further explosion-proof valve in accordance with some embodiments of the present disclosure.
FIG. 12 is a schematic structural diagram of yet another explosion-proof valve in accordance with some embodiments of the present disclosure.
FIG. 13 is a schematic diagram of a front view of an explosion-proof valve in accordance with some embodiments of the present disclosure.
FIG. 14 is a schematic structural diagram of one additional explosion-proof valve in accordance with some embodiments of the present disclosure.
FIG. 15 is a schematic structural diagram of still a further explosion-proof valve in accordance with some embodiments of the present disclosure.
FIG. 16 is a schematic diagram of a front view of another explosion-proof valve in accordance with some embodiments of the present disclosure.
FIG. 17 is a schematic diagram illustrating an assembled structure of a top cap of a battery cell in accordance with some embodiments of the present disclosure.
FIG. 18 is a schematic structural perspective view of a protective sheet in accordance with some embodiments of the present disclosure.
FIG. 19 is a schematic structural perspective view of a gasket in accordance with some embodiments of the present disclosure.
FIG. 20 is a schematic structural diagram of a protective sheet body in accordance with some embodiments of the present disclosure.
FIG. 21 is a schematic exploded structural diagram of a top cap of a battery cell in accordance with some embodiments of the present disclosure.
FIG. 22 is a schematic diagram of an assembled structure of a top cap and a cell housing of a battery cell in accordance with some embodiments of the present disclosure.

### DETAILED DESCRIPTION OF THE EMBODIMENTS

The embodiments of the present disclosure are described in detail with reference to the accompanying drawings, in order to make the purposes, technical solutions and advantages of the embodiments of the present disclosure clearer. However, persons of ordinary skill in the art should understand, in the embodiments of the present disclosure, numerous technical details are provided for readers to better understand the present disclosure. However, even without these technical details and various variations and modifications based on the embodiments hereinafter, the technical solutions of the present disclosure may also be implemented.

In the embodiments of the present disclosure, the terms "upper," "lower," "left," "right," "front," "rear," "top," "bottom," "inner," "outer," "central," "vertical," "horizontal," "transversal," "longitudinal," and the like indicate orientations and position relationships which are based on the illustrations in the accompanying drawings. These terms are merely for ease and brevity of the description, instead of indicating or implying that the devices, elements or components shall have a particular orientation or shall be constructed and operated based on the particular orientation.

Furthermore, some of the above terms may be used to indicate other meanings in addition to an orientation or positional relationship, for example, the term "on" may also be used to indicate a certain dependency or connection relationship in some cases. To a person of ordinary skill in the art, the specific meanings of these terms in the embodiments of the present disclosure may be understood according to the actual circumstances and contexts.

In addition, the terms "mounted," "disposed," "be provided with," "arranged," "connection," "interconnection," and derivative forms thereof shall be understood in a broad sense. For example, connection may be understood as secured connection, detachable connection or integral connection, may be understood as mechanical connection or electrical connection, or understood as direct connection, indirect connection via an intermediate medium, or communication between the interiors of two devices, elements or components. Persons of ordinary skill in the art may understand the specific meanings of the above terms in the embodiments of the present disclosure according to the actual circumstances and contexts.

Moreover, the terms "first," "second," and the like are only used for distinguishing different devices, elements or components (Specific types and configurations of which may be the same or different), but shall not be understood as indication or implication of relative importance and the number. The term "a plurality of" signifies two or more than two, unless otherwise specified.

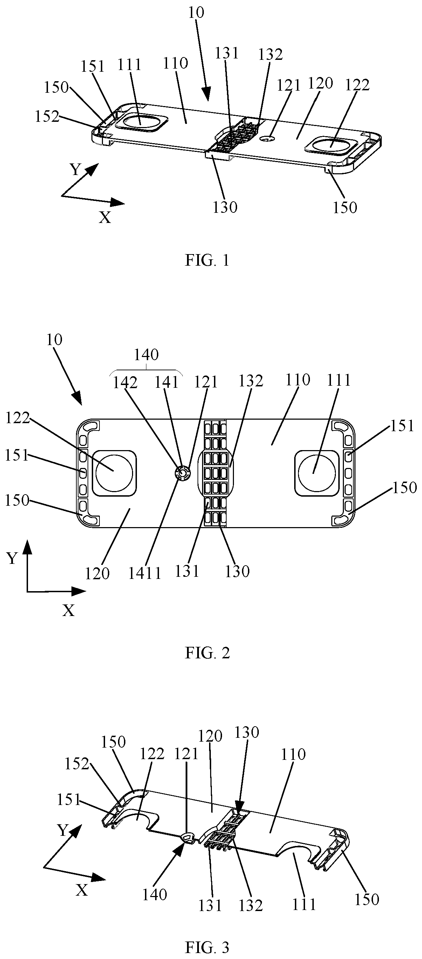

The present disclosure provides a bottom plastic structure of a top cap of a battery cell. Referring to FIG. 1 to FIG. 3, the bottom plastic structure includes a first plate 110, a second plate 120, and an intermediate protrusion 130 disposed between the first plate 110 and the second plate 120. The intermediate protrusion 130 is protruded with respect to a bottom side of the first plate 110 and a bottom side of the second plate 120. The first plate 110 is provided with a first post hole 111. The second plate 120 is provided with a first liquid injection hole 121 and a second post hole 122. Furthermore, the second plate 120 is provided with a stop portion 140 on its bottom side, and the stop portion 140 protrudes from a circumferential side of the first liquid injection hole 121. The stop portion 140 is of a hollowed-out structure. The area of a hollowed-out region of the stop portion 140 is greater than an area of a cross-section of the first liquid injection hole 121.

In the embodiments of the present disclosure, electrolyte is injected into the cell from the first liquid injection hole 121. Since the hollowed-out stop portion 140 is arranged on a bottom side of the first liquid injection hole 121, when the electrolyte enters the first liquid injection hole 121, the electrolyte may be injected into the cell through the hollowed-out region of the stop portion 140 in a divergent fashion, and thus the stop portion 140 is capable of changing a flow direction of the electrolyte injected into the cell through the first liquid injection hole 121, and is capable of diverging the electrolyte into multiple streams and causing these streams to be injected into the cell along different directions, such that blocking of the electrolyte by the inner wall of the cell is greatly reduced, and hence a liquid injection speed through the first liquid injection hole 121 is improved and liquid injection time is reduced. The area of the hollowed-out region of the stop portion 140 is greater than the area of the cross-section of the first liquid injection hole 121, such that the electrolyte injected through the first liquid injection hole 121 flows out from the stop portion 140 in time, the stop portion 140 is prevented from blocking the electrolyte injected into the first liquid injection hole 121, and hence the impact of the stop portion 140 on the liquid injection speed is avoided. Furthermore, upon completion of liquid injection, the first liquid injection hole 121 needs to be sealed by a sealing rivet 30, a negative pressure is formed inside the cell, and the stop portion 140 is capable of stopping the sealing rivet 30, such that the sealing problem caused because the sealing rivet 30 is pressed into the inside of the cell due to the negative pressure is addressed, and hence leakage at the first liquid injection hole 121 is prevented. Therefore, the bottom plastic structure of the top cap improves the liquid injection speed, and also prevents leakage of the electrolyte. In addition, the intermediate protrusion 130 increases an overall strength of the bottom plastic structure 10

Specifically, the stop portion 140 includes a side surface 141 and a bottom surface 142. The side surface 141 is in contact with the bottom side of the second plate 120 and surrounds a circumference of the first liquid injection hole 121, and the side surface 141 extends along a direction away from the second plate 120 and is in connection with the bottom surface 142. A plurality of diverging holes 1411 are provided on the side surface 141 and are uniformly spaced apart from each other along a circumference of the stop portion 140, and a total area of all the diverging holes 1411 is greater than the area of the cross-section of the first liquid injection hole 121. In this way, the bottom surface 142 functions as a good stopper against the sealing rivet 30, and with the plurality of diverging holes 1411 in the side surface 141, the electrolyte injected through the first liquid injection hole 121 is rapidly diverged and flows out along a circumferential side of the stop portion 140, such that the liquid injection speed through the first liquid injection hole 121 is improved.

More specifically, the stop portion 140 may be in the shape of a bowl, a barrel, or the like, and has a thickness of about 0.8 mm, and preferably 0.8 mm. The diverging hole 1411 may be in the shape of a trapezoid, rectangle, triangle, or the like, which may be specifically defined depending on the shape of the side surface 141. In this embodiment, the stop portion 140 is bowl-shaped, and the diverging holes 1411 are trapezoidal holes. In addition, a hole may be defined in the bottom surface 142 of the stop portion 140, and a radial dimension of the hole needs to be smaller than a minimum radial dimension of the sealing rivet 30.

The first plate 110, the second plate 120, and the intermediate protrusion 130 may be connected by means of bonding, clamping, or the like, or may be integrally formed. The stop portion 140 and the second plate 120 may be connected by means of bonding, clamping, or the like, or may be integrally formed. The connection manner may be specifically designed according to actual design and use requirements, and is not specifically limited in this embodiment. Furthermore, the first post hole 111 and the second post hole 122 are configured to allow a positive post 50 and a negative post 60 to run through the bottom plastic structure 10, respectively. The first liquid injection hole 121 may be disposed in the first plate 110, and in this case, the stop portion 140 may be arranged on the bottom side of the first plate 110 and may be protruded from the circumferential side of the first liquid injection hole 121 along a direction away from the first plate 110.

Further, a side-end protrusion 150 is arranged on each of two opposite sides of the first plate 110 and the second plate 120. The side-end protrusions 150 are protruded from the bottom side of the first plate 110 and the bottom side of the second plate 120 respectively, and a plurality of holes 151 are defined in the side-end protrusion 150. In this way, embedding spaces are formed between the side-end protrusion 150 and the first plate 110 and between the side-end protrusion 150 and the second plate 120 respectively, such that a coil core of the cell structure is embedded at the bottom side of the bottom plastic structure 10, thereby facilitating mounting between the top cap and the structure arranged at the bottom side of the top cap of the battery cell. The plurality of holes 151 in the side-end protrusion 150 reduces the weight of the bottom plastic structure 10, and hence reduces the weight of the top cap of the battery cell.

Specifically, the side-end protrusion 150 is of a frame structure, and a plurality of reinforcement ribs 152 extending along a lengthwise direction X of the bottom plastic structure 10 are provided in the side-end protrusion 150. As such, the frame structure of the side-end protrusion 150 further reduces the weight of the bottom plastic structure 10, and the reinforcement ribs 152 enhances the strength of the bottom plastic structure 10.

More specifically, the number of holes 151 and the number of reinforcement ribs 152 in and on the side-end protrusion 150 may be two, three, four, or the like respectively, and the number of holes 151 is greater than the number of reinforcement ribs 152. The number of the holes 151 and the reinforcement ribs 152 may be designed according to actual needs, which is not limited in the embodiments of the present disclosure.

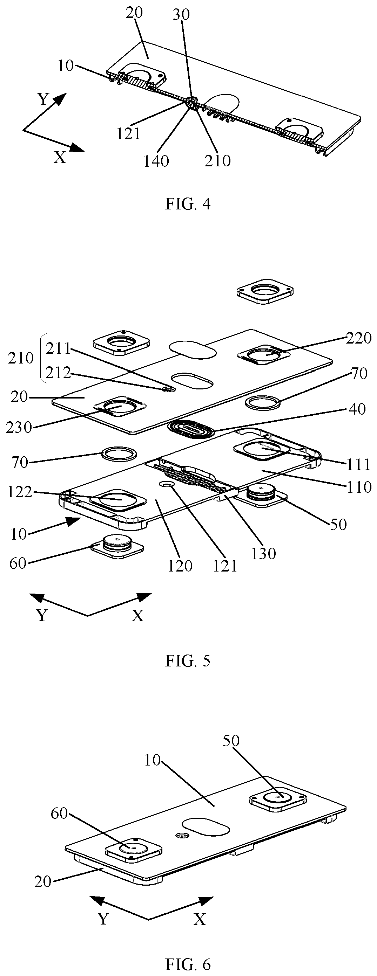

The present disclosure further provides a top cap of a battery cell. Referring to FIG. 4 to FIG. 6, the top cap includes an aluminum sheet 20, and the bottom plastic structure of any one of the top caps as described above. A top side of the bottom plastic structure 10 is arranged on a bottom side of the aluminum sheet 20, and sealing rings 70 are arranged between the bottom plastic structure 10 and the aluminum sheet 20, and are sleeved on posts respectively.

In the embodiments of the present disclosure, since the hollowed-out stop portion 140 is arranged on the bottom side of the first liquid injection hole 121 of the bottom plastic structure 10, when electrolyte is injected through the first liquid injection hole 121, the stop portion 140 is capable of diverging the electrolyte into multiple streams and causing these streams to be injected into the battery cell along different directions, such that blocking of the electrolyte by the inner wall of the battery cell is greatly reduced, and hence the liquid injection speed through the first liquid injection hole 121 is improved and liquid injection time is reduced. In addition, the stop portion 140 is capable of stopping the sealing rivet 30, such that the sealing problem caused by the sealing rivet 30 pressed into the inside of the battery cell due to the negative pressure is addressed, and hence leakage at the first liquid injection hole 121 is prevented. Therefore, the bottom plastic structure of the top cap improves the liquid injection speed, and also prevents leakage of the electrolyte.

In addition, in the related art, the liquid injection hole is generally in a shape of straight cylinder, and when the electrolyte is injected into the battery cell through the straight cylindrical liquid injection holes, the electrode sheet in the battery cell would be flushed with a greater intensity, resulting in a risk of peeling off of the positive electrode material or the negative electrode material on the electrode sheet. In the embodiments of the present disclosure, the stop portion 140 can diverge the electrolyte into multiple streams and cause these streams to be injected into the interior of the battery cell in different directions, such that blocking of the electrolyte by the inner wall of the battery cell is greatly reduced, and hence a liquid injection speed through the first liquid injection hole 121 is improved and liquid injection time is reduced. At the same time, because the electrolyte is divided into multiple streams, the flushing intensity of the electrolyte on the electrode sheet of the battery cell when injecting the electrolyte into the battery cell is relatively weaker, and thus reducing the risk of peeling off of the positive electrode material or the negative electrode material due to the flushing in a relatively larger intensity of the electrolyte on the electrode sheet, thereby ensuring that the electrode sheet in the battery cell maintains good performance after the electrolyte is injected into the battery cell.

Further, the top cap further includes a sealing rivet 30, and the aluminum sheet 20 is provided with a second liquid injection hole 210 having the same central axis as the first liquid injection hole 121. The sealing rivet 30 is inserted into the second liquid injection hole 210, and a gap between a bottom end of the sealing rivet 30 and the bottom of the stop portion 140 is set in the range of 0.5 mm to 2 mm, for example, 0.5 mm, 0.9 mm, 1.6 mm, 2 mm, or the like. Accordingly, since the aluminum sheet 20 is arranged on the top side of the bottom plastic structure 10, arranging the second liquid injection hole 210 directly above the first liquid injection hole 121 helps to accelerate the liquid injection speed of the electrolyte.

Specifically, the second liquid injection hole 210 is a stepped hole including a first hole section 211 and a second hole section 212 A radial dimension of the first hole section 211 is greater than a radial dimension of the second hole section 212, and the second hole section 212 is closer to the first liquid injection hole 121 than the first hole section 211. In this way, the stepped second liquid injection hole 210 also serves as a stopper against the sealing rivet 30, such that sealing performance at the liquid injection hole is further ensured.

The aluminum sheet 20 is further provided with a third post hole 220 and a fourth post hole 230, which have the same central axis as the first post hole 111 and the second post hole 122, respectively. The positive post 50 successively runs through the first post hole 111 and the third post hole 220 and extends to the outside of the top cap, and the negative post 60 successively runs through the second post hole 122 and the fourth post hole 230 and extends to the outside of the top cap.

Further, the top cap further includes an explosion-proof valve 40, and a plurality of vent holes 131 are arranged in the intermediate protrusion 130. The explosion-proof valve 40 is mounted on a back surface of the intermediate protrusion 130, and is directly aligned with the plurality of vent holes 131. In this way, the intermediate protrusion 130 is protruded downwards with respect to the explosion-proof valve 40 so as to ensure that a sufficient exhaust space is present between the bottom plastic structure 10 and the explosion-proof valve 40. The vent holes 131 in the intermediate protrusion 130 filter the rupture disc of the explosion-proof valve 40 when the explosion-proof valve 40 ruptures, to prevent the rupture disc of the explosion-proof valve 40 from falling into the battery cell at the bottom side of the bottom plastic structure 10, while implementing the exhaust function.

Specifically, the explosion-proof valve 40 may be mounted on the bottom plastic structure 10 by means of clamping, bonding, threading, or the like. In this embodiment, a catch slot 132 is arranged in each of two sides of the intermediate protrusion 130 that connect the first plate 110 and the second plate 120, and the explosion-proof valve 40 is clamped into the catch slots 132. In this way, the explosion-proof valve 40 may be mounted on the back surface of the intermediate protrusion 130 by a simple structure, such that the mounting structure between the explosion-proof valve 40 and the intermediate protrusion 130 is made simpler. In addition, a depression depth of the catch slot 132 is less than a protrusion height of the intermediate protrusion 130, such that a spacing is present between the bottom plastic structure 10 and the explosion-proof valve 40, and hence a sufficient exhaust space is ensured. The depression depth of the catch slot 132 is equal to the thickness of the explosion-proof valve 40, such that the top side of the bottom plastic structure 10 is abutted against the bottom side of the aluminum sheet 20, such that no gap is present between the bottom plastic structure 10 and the aluminum sheet 20, and hence the top cap of the battery cell is made more compact.

More specifically, the catch slot 132 may be arranged at a middle position of the intermediate protrusion 130 along a widthwise direction Y of the bottom plastic structure 10, or may be arranged at positions close to the two sides of the intermediate protrusion 130 along the widthwise direction Y of the bottom plastic structure 10. Exemplarily, in this embodiment, the catch slot 132 is arranged at the middle position of the intermediate protrusion 130 along the widthwise direction Y of the bottom plastic structure 10.

The intermediate protrusion 130 is rectangular, a single vent hole 131 is strip-shaped, and extends along the widthwise direction Y of the bottom plastic structure 10. Further, the plurality of vent holes 131 is disposed in the intermediate protrusion 130 and are uniformly spaced apart from each other. Exemplarily, the number of vent holes 131 may be six, twelve, or the like, and may be specifically designed according to actual needs, and is not limited in this embodiment. The vent hole 131 has a relatively larger size along the widthwise direction Y of the bottom plastic structure 10, such that the intermediate protrusion 130 ensures a sufficient exhaust area for the explosion-proof valve 40, and hence a better function of guiding gas. The size of the vent hole 131 along the lengthwise direction X of the bottom plastic structure 10 is less than the rupture disc of the explosion-proof valve 40, such that the rupture disc of the explosion-proof valve 40 is prevented from falling into the battery cell at the bottom side of the bottom plastic structure 10.

In the above embodiments, the electrolyte of the battery cell is injected into the interior of the battery cell through the first liquid injection hole 121, and since the bottom side of the first liquid injection hole 121 is provided with a hollowed-out stop portion 140, the electrolyte would be injected into the interior of the battery cell in a divergent manner through the hollowed-out area of the stop portion 140 after it enters into the first liquid injection hole 121, and thus the stop portion 140 is able to change the direction of the flow of electrolyte injected into the battery cell through the first liquid injection hole, and can divide the electrolyte into multiple streams and cause them to be injected in different directions, thereby greatly reducing the blockage of electrolyte by the interior wall of the battery cell, and thus improving a liquid injection speed through the first liquid injection hole 121 and reducing liquid injection time. At the same time, as the electrolyte is diverged into multiple streams, during the injection of the electrolyte into the interior of the battery cell, the flushing intensity of the electrolyte on the interior of the battery cell is relatively weaker, and thus the bombardment force of the electrolyte on the materials inside the battery cell becomes weaker, thereby making the electrode sheet inside the battery cell subject to the flushing intensity of the electrolyte weaker, and thus avoiding the positive electrode material or the negative electrode material on the electrode sheet to be peeled off from the electrode sheet due to the flushing of the electrolyte. Therefore, the embodiments of the present disclosure can also protect the electrode sheet from damage during injection of the electrolyte, thereby ensuring that the electrode sheet has good electrical conductivity.

The hollowed-out area of the stop portion 140 is larger than the cross-sectional area of the first liquid injection hole 121, so as to ensure that the electrolyte injected through the first liquid injection hole 121 can flow out of the stop portion 140 in a timely manner, to avoid the stop portion 140 from causing a blockage to the electrolyte injected into the first liquid injection hole 121, and thus to avoid the stop portion 140 from having an effect on the liquid injection speed.

Moreover, after the liquid injection is completed, the first liquid injection hole 121 is required to be sealed by the sealing rivet 30, and the inside of the battery cell is under negative pressure, and the stopping portion 140 can play a stopping role to avoid the sealing rivet 30 being pressed into the inside of the battery cell due to the negative pressure and causing sealing problems, and thus avoiding the liquid leakage at the first liquid injection hole 121.

Thus, the bottom plastic structure 10 of the top cap can increase the liquid injection speed and also avoid the problem of liquid leakage. Moreover, the provision of the intermediate protrusion 130 can increase the overall strength of the bottom plastic structure 10.

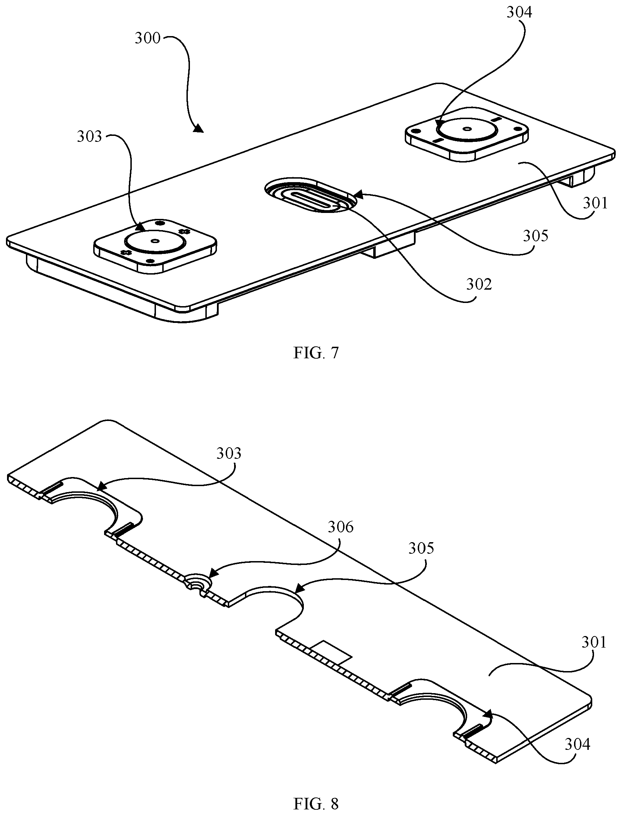

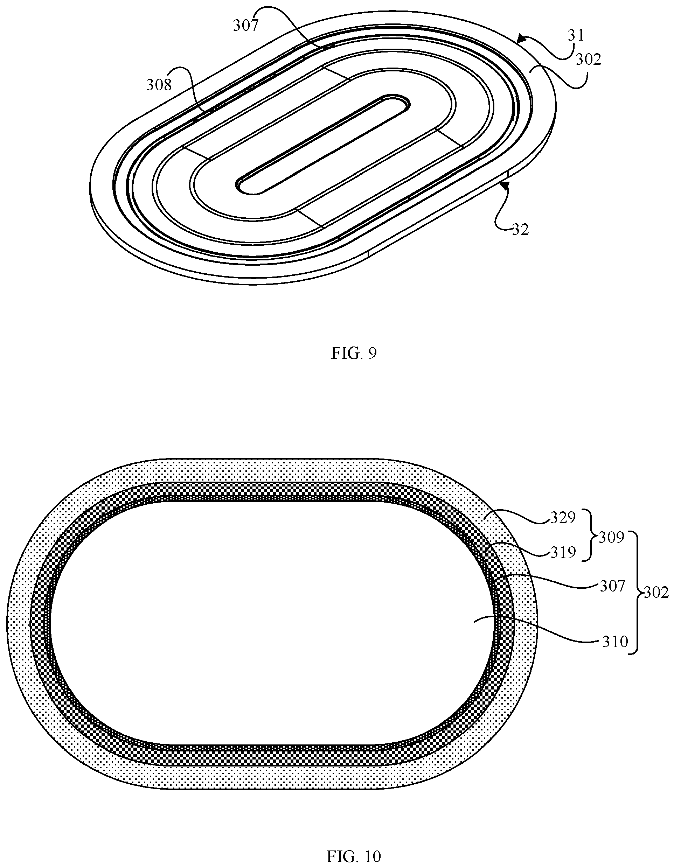

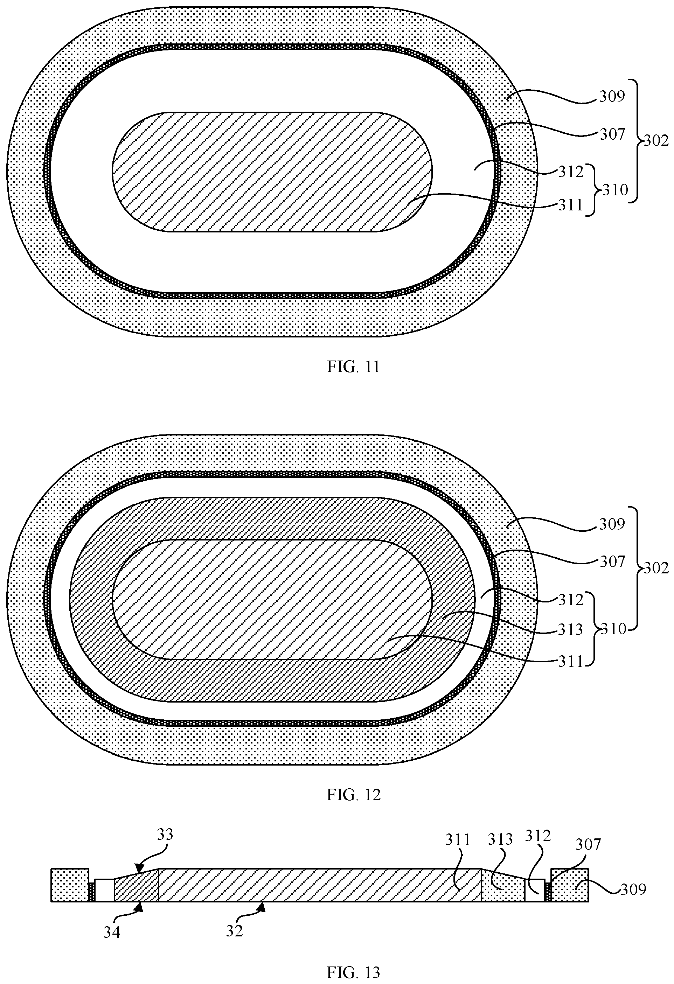

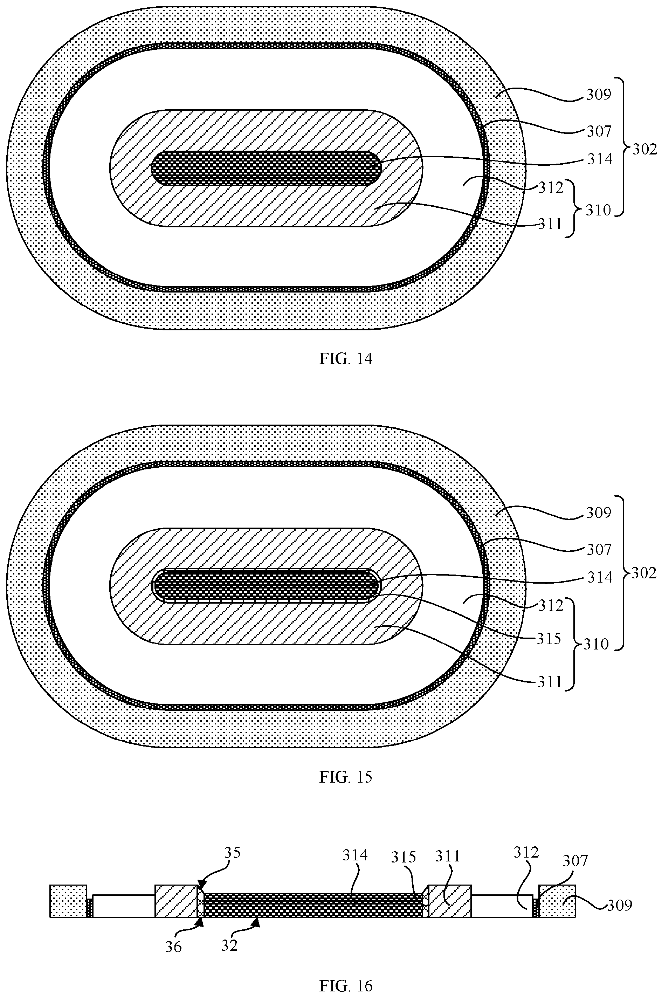

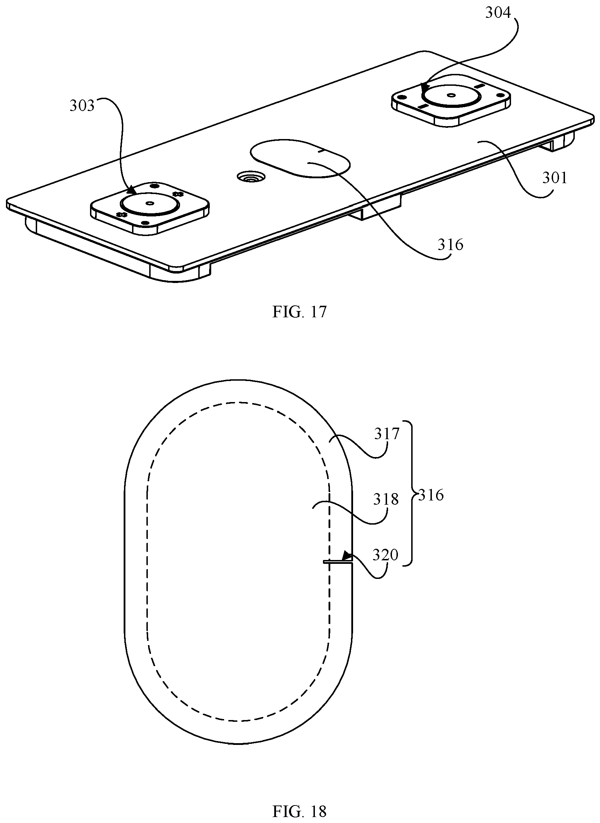

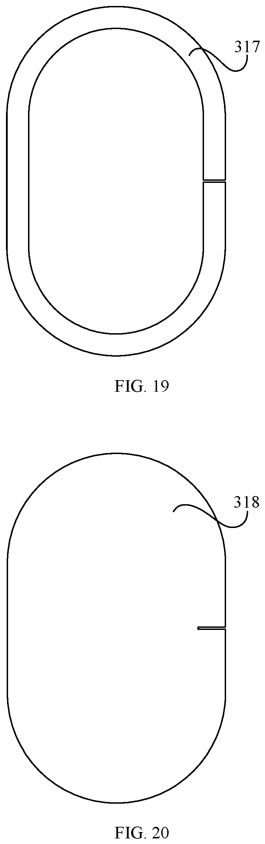

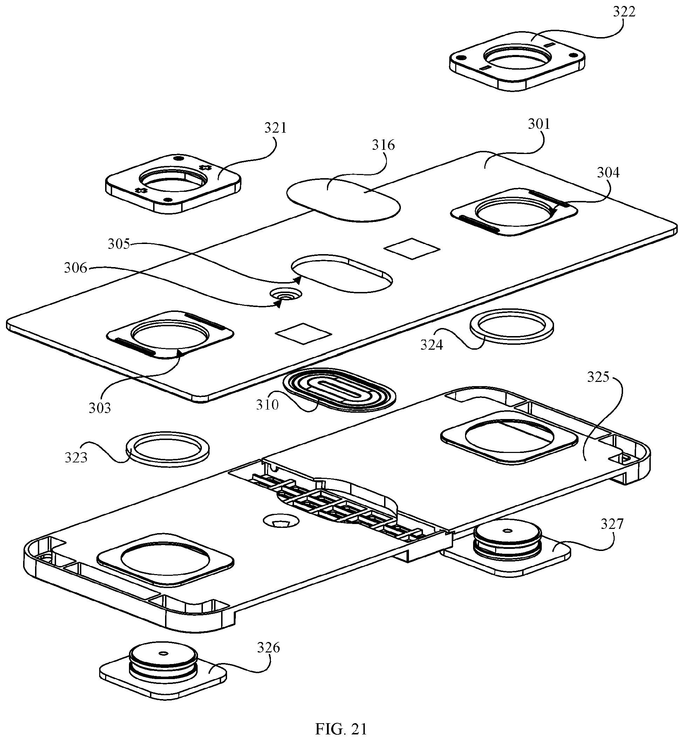

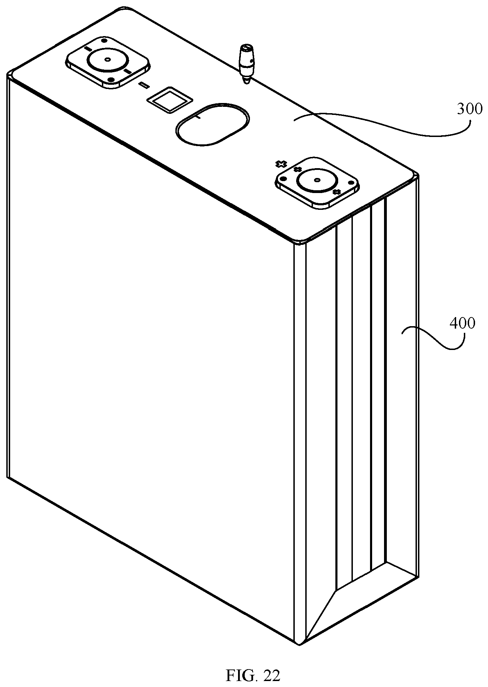

FIG. 7 is a schematic diagram illustrating an assembled structure of a top cap in accordance with some embodiments of the present disclosure. FIG. 8 is a schematic diagram illustrating a three-dimensional half-sectional view of an aluminum sheet in accordance with some embodiments of the present disclosure. FIG. 9 is a schematic structural diagram of an explosion-proof valve in accordance with some embodiments of the present disclosure. FIG. 10 is a schematic structural diagram of another explosion-proof valve in accordance with some embodiments of the present disclosure. FIG. 11 is a schematic structural diagram of a further explosion-proof valve in accordance with some embodiments of the present disclosure. FIG. 12 is a schematic structural diagram of yet another explosion-proof valve in accordance with some embodiments of the present disclosure. FIG. 13 is a schematic diagram of a front view of an explosion-proof valve in accordance with some embodiments of the present disclosure. FIG. 14 is a schematic structural diagram of one additional explosion-proof valve in accordance with some embodiments of the present disclosure. FIG. 15 is a schematic structural diagram of still a further explosion-proof valve in accordance with some embodiments of the present disclosure. FIG. 16 is a schematic diagram of a front view of another explosion-proof valve in accordance with some embodiments of the present disclosure. FIG. 17 is a schematic diagram illustrating an assembled structure of a top cap in accordance with some embodiments of the present disclosure. FIG. 18 is a schematic structural perspective view of a protective sheet in accordance with some embodiments of the present disclosure. FIG. 19 is a schematic structural perspective view of a gasket in accordance with some embodiments of the present disclosure. FIG. 20 is a schematic structural diagram of a protective sheet body in accordance with some embodiments of the present disclosure. FIG. 21 is a schematic exploded structural diagram of a top cap in accordance with some embodiments of the present disclosure. FIG. 22 is a schematic diagram of an assembled structure of a top cap and a housing of a battery cell in accordance with some embodiments of the present disclosure.

It should be noted that the specific illustrations of the aluminum sheet and the bottom plastic structure in the embodiments of FIG. 1 to FIG. 6 are also applicable to the following embodiments, and in order to avoid redundancy, the bottom plastic structure will not be described in the following embodiments, which can be referred to the corresponding descriptions in the foregoing.

Referring to FIG. 7 and FIG. 8, a top cap 300 according to some embodiments of the present disclosure includes an aluminum sheet 301 and an explosion-proof valve 302. The aluminum sheet is provided with a positive post hole 303, a negative post hole 304, and an explosion-proof hole 305 that all run through the aluminum sheet 301 along a thicknesswise direction. The positive post hole 303 and the negative post hole 304 are disposed at two different orientations of the explosion-proof hole 305, respectively. The explosion-proof valve 302 is secured onto the aluminum sheet 301 to cover the explosion-proof hole 305.

It should be noted that the embodiments of the present application do not limit the positional relationship between the positive post hole 303 and the negative post hole 304, and when one of the positive post hole 303 and the negative post hole 304 shown in FIG. 7 is a positive post hole, the other is a negative post hole.

The aluminum sheet 301 is a major part of the top cap, and is configured to seal the battery cell and prevent electrolyte inside the battery cell from leakage. In this way, an enclosed chemical reaction site is formed inside the battery cell, so as to facilitate occurrence of electrochemical reactions. The positive post hole 303 is configured to allow a positive post to run through, such that the positive post is connected to the inside of the battery cell and an electricity usage environment outside a battery. The negative post hole 304 is configured to allow a negative post to run through, such that the negative post is connected to the inside of the battery cell and the electricity usage environment outside the battery. The explosion-proof hole 305 is configured to secure the explosion-proof valve 302, such that gas inside the battery cell is discharged when the explosion-proof valve 302 is opened. The positive post hole 303 and the negative post hole 304 are disposed at two different orientations of the explosion-proof hole 305 respectively to prevent confusion between the positive and negative posts.

In some embodiments, a liquid injection hole 306 running through the aluminum sheet 301 may also be arranged in the aluminum sheet 301. The liquid injection hole 306 is configured to facilitate injection of electrolyte into the battery cell, such that the electrochemical reaction occurs in the electrolyte to generate a current. FIG. 8 is a three-dimensional half-sectional view of an aluminum sheet 301 according to some embodiments of the present disclosure. The aluminum sheet 301 is provided with a positive post hole 303, a negative post hole 304, an explosion-proof hole 305, and a liquid injection hole 306 that all run through the aluminum sheet 301 along a thicknesswise direction.

In some embodiments, the liquid injection hole 306 may be arranged far away from the negative post hole 304 and a negative post corresponding to the negative post hole 304. In this way, the situation where electrolyte accidentally leaks during injection of the electrolyte through the liquid injection hole 306 and the electrolyte is in contact with the negative post and hence current leakage is caused is avoided, such that the safety of the battery is at least improved.

Referring to FIG. 7 and FIG. 9, the explosion-proof valve 302 is secured onto the aluminum sheet 301 to cover the explosion-proof hole 305. The explosion-proof valve 302 has an upper surface 31 and a lower surface 32 that are opposite to each other. The upper surface 31 of the explosion-proof valve 302 faces towards the explosion-proof hole 305. During normal use of the battery cell, the explosion-proof valve 302 achieves an effect of sealing the battery cell, and preventing electrolyte inside the battery cell from leakage. When the gas pressure inside the battery cell exceeds the exploration threshold, the exploration-proof valve 302 is opened towards the outside of the battery cell, such that the gas inside the battery cell is discharged.

In some embodiments, the explosion-proof valve 302 may be made of aluminum or an aluminum alloy. For example, the explosion-proof valve 302 may be made of a 1060 aluminum material. The 1060 aluminum material has an aluminum purity of more than 99.6%, has good moldability, can withstand various pressure processing, stretching or bending, so as to facilitate industrial production of explosion-proof valves with specific shapes. The 1060 aluminum material also has good corrosion resistance, which is conducive to preventing the explosion-proof valve 302 from being corroded by the electrolyte in the battery, and hence the explosion-proof valve 302 is prevented from being weakened in terms of explosion-proof strength. Still for example, the explosion-proof valve 302 may also be made of a 3000-series aluminum alloy, for example, a 3003 aluminum alloy, a 3105 aluminum alloy, a 3A21 aluminum alloy, or the like. The 3000-series aluminum alloy is an aluminum-manganese alloy series. Because of high content of manganese, corrosion resistance of the aluminum alloy can be effectively improved, such that the corrosion of the explosion-proof valve 302 by the electrolyte can be avoided and the strength of the explosion-proof valve 302 is prevented from decreasing. Addition of manganese also improves welding performance of the aluminum alloy, facilitates welding and securing of the explosion-proof valve 302 to the battery, prevents rupture of the welding site caused by a pressure impact when the explosion-proof valve 302 is depressurized, and is conducive to maintaining structural integrity of the battery.

In some embodiments, the explosion-proof valve 302 may be made by an extrusion molding process. Extrusion molding is a plastic forming process that involves applying a pressure to a metal blank placed in a mold cavity, forcing the metal blank to undergo a directional plastic deformation, and extruding the same from a die orifice of an extrusion die to obtain a part or a semi-finished product of a desired cross-sectional shape and size and with specific mechanical properties. The process characteristics of extrusion molding determine that extruding molding can be used not only to produce rods, tubes, or wire products with simple cross-sectional shape, but also to produce structures with complex cross-sectional shape, which is conducive to mass production of complex explosion-proof valve structures. Moreover, products produced by extrusion molding have high precision, good surface quality and good compatibility with light metals such as aluminum or light alloys such as aluminum alloys, which can reduce the defect rate of finished products and effectively improve the utilization rate of materials and the yield of finished products.

In some embodiments, the explosion-proof valve 302 is in a capsule shape. The capsule shape refers to a combined shape in which the middle section is quadrilateral, and two opposite sides of the quadrilateral extend into an arch shape, which overall resembles a capsule. The straight side of the arch is coincident with the straight side of the quadrilateral. A symmetrical structure is beneficial to uniform stress on the explosion-proof valve 302, which avoids the situation where the stress on the explosion-proof valve 302 is concentrated in a specific area to cause the explosion-proof valve 302 to open accidentally. In this way, the explosion-proof valve 302 can be used normally. Moreover, the arched design reduces the sharp corner of the explosion-proof valve 302, which is conducive to manufacture. For example, in extrusion molding, compared with workpieces with sharp corners, the material of workpieces with rounded corners flows more slowly in the mold, and the stress at the corners of the workpieces is small. In this way, the quality of the explosion-proof valve 302 can be improved.

Referring to FIG. 9, the explosion-proof valve 302 includes a rupture score 307 and a reinforcement rib 308. The rupture score 307 is a dent recessed from the upper surface 31 towards the lower surface 32, and the rupture score 307 is a weak portion on the explosion-proof valve 302, which ruptures when the gas pressure inside the battery cell is greater than the explosion threshold of the explosion-proof valve 302, such that a notch for discharging the gas is formed in the explosion-proof valve 302, and hence the gas pressure is balanced inside and outside the battery cell and explosion of the battery cell is prevented. The reinforcement rib 308 is disposed in a partial region of the dent to avoid complete tear of the rupture score 307 and thereby control the orientation of the ejected gas. A distance between the reinforcement rib 308 and the negative post hole 304 (as shown in FIG. 7) is less than a distance between the reinforcement rib 308 and the positive post hole 303 (as shown in FIG. 7), such that the ejected gas is prevented from being ejected towards the negative post hole 304 and the negative post corresponding to the negative post hole 304. In this way, a small amount of electrolyte carried out by the ejected gas is prevented from being in contact with the negative post, and hence leakage of electricity of the negative post is prevented, which is at least conducive to improving the safety performance of the battery.

In some embodiments, a thickness of the rupture score 307 is in the range of 0.1 mm to 0.15 mm. For example, the thickness of the rupture score 307 may be 0.01 mm, 0.02 mm, 0.12 mm. or 0.15 mm. The rupture threshold of the rupture score 307 may be controlled by controlling the thickness of the rupture score 307, such that the rupture score 307 can be designed to open under an appropriate pressure, and hence normal use of the battery is ensured. For example, the rupture score 307 is prevented from being accidentally opened during normal use of the battery, such that the leakage of the electrolyte is prevented. Still for example, the rupture score 307 is prevented from still failing to be opened even when the rupture pressure of the battery has been reached, such that an explosion-proof effect of the explosion-proof valve 302 is ensured.

In some embodiments, a cross-section of the dent may be in the shape of an inverted trapezoid having a height of 0.18 mm, a long base of 0.3 mm, and a short base of 0.2 mm. It should be understood that in designing the rupture score 307, different cross-sectional shapes, deployment lengths, dent depths, and dent widths may be defined according to the designed rupture threshold to accommodate different usage scenarios.

In some embodiments, a thickness of the reinforcement rib 308 is greater than the thickness of the rupture score 307. The reinforcement rib 308 is disposed in a partial region of the dent and is configured to enhance the connection between the rupture score 307 and an external platform and a connection portion to avoid complete tear of the rupture score 307 when the explosion-proof valve 302 is opened. In this way, detachment of the rupture disc is prevented and hence the impact caused by the detachment of the rupture disc to other structures inside the battery is prevented, which is conducive to improving the safety of the battery.

In some embodiments, the thickness of the reinforcement rib 308 may be in the range of 0.16 mm to 0.25 mm. For example, the thickness of the reinforcement rib 308 may be 0.16 mm, 0.18 mm, 0.21 mm. or 0.25 mm. It should be understood that the thickness of the reinforcement rib 308 may be designed freely as long as the reinforcement rib 308 functions to enhance the connection between the rupture score 307 and the external platform and the connection portion.

In some embodiments, a deployment length of the reinforcement rib 308 may be less than or equal to 1/6 of a deployment length of the rupture score 307. In this way, the occurrence of the problem that the gas exhaust capability of the explosion-proof valve 302 is affected due to an excessively short tearable portion of the rupture score 307 is avoided, which is at least conducive to improving to the explosion-proof effect of the explosion-proof valve 302. In this way, the safety of the battery is improved. It should be understood that a proportion of the deployment length of the reinforcement rib 308 in the deployment length of the rupture score 307 needs to be designed in conjunction with the structure of the rupture score 307.

In some embodiments, the explosion-proof valve 302 of the top cap may further includes a mounting signage. The mounting signage may be disposed on the lower surface. The mounting signage may also be arranged adjacent to the reinforcement rib 308. The mounting signage is set to improve the identification of a mounting orientation of the explosion-proof valve 302, such that the mounting orientation of the explosion-proof valve 302 is normalized, an ejection orientation of the gas inside the battery cell when the explosion-proof valve 302 is opened is guided, and the gas flow is prevented from damaging the internal structure of the battery, which is conducive to improving the safety of the battery.

In some embodiments, the mounting signage may be in the shape of a letter of character. In some other embodiments, the mounting signage may be in the shape of a graph. It should be understood that as long as the mounting signage is distinctive, and the shape of the mounting signage may be in any form.

Referring to FIG. 10, in some embodiments, the explosion-proof valve 302 further includes a connection portion 309. The connection portion 309 includes a first outer ring portion 319 and a second outer ring portion 329. The first outer ring portion 319 is arranged around an outer circumference of the rupture score 307, and the first outer ring portion 319 is connected to the rupture score 307. The second outer ring portion 329 is arranged around an outer circumference of the first outer ring portion 319, and the second outer ring portion 329 is connected to the first outer ring portion 319. A thickness of the first outer ring portion 319 is less than or equal to a thickness of the second outer ring portion 329.

The connection portion 309 is configured to connect the explosion-proof valve 302 to the top cap. In some embodiments, by welding the connection portion 309 to the top cap, the explosion-proof valve 302 may be secured onto the top cap, such that the battery cell is sealed, and electrolyte inside the battery cell is prevented from leakage.

The second outer ring portion 329 is configured to provide a contact surface, such that the explosion-proof valve 302 is connected to the top cap. The specific region is defined so as to facilitate the connection of the explosion-proof valve 302 with the top cap, improve the standardization degree of the explosion-proof valve 302, facilitate the improvement of the assembly efficiency and thus the production efficiency, and also avoid the quality problems caused by the incomplete alignment of the explosion-proof valve 302 with the top cap assembly of the battery cell, which is conducive to improving the safety of the battery.

For ease of machining of the rupture score 307, the thickness of the first outer ring portion 319 may be less than the thickness of the second outer ring portion 329, and the thickness of the first outer ring portion 319 may be greater than the thickness of the rupture score 307. For example, when during machining of the explosion-proof valve 302 by an extrusion molding process, it is generally impossible to form a rupture score 307 having a precise size, and it is necessary to perform secondary machining on the explosion-proof valve 302 upon the extrusion molding, and to etch the rupture score 307 having a precise size on the explosion-proof valve 302. To facilitate the etching process, the thickness of the first outer ring portion 319 may be made less than the thickness of the second outer ring portion 329.

In some embodiments, the thickness of the second outer ring portion 329 may be in the range of 0.3 mm to 0.7 mm. For example, the thickness may be 0.3 mm, 0.4 mm, 0.5 mm, or 0.7 mm. In some embodiments, the thickness of the second outer ring portion 329 is equal to a thickness of a substrate of the explosion-proof valve 302. The second outer ring portion 329 is a portion where the explosion-proof valve 302 is connected to the top cap, and therefore, the second outer ring portion 329 needs to have a specific thickness to avoid the problem that the explosion-proof valve 302 and the top cap are detached due to an excessively small thickness of the second outer ring portion 329. In this way, impacts caused to the safety of the battery are prevented. In addition, the second outer ring portion 329 should not be too thick, so as not to occupy too much space of other structures on the top cap of the battery cell, which is conducive to avoiding waste of materials.

Still referring to FIG. 10, in some embodiments, the explosion-proof valve 302 may further include a rupture disc 310. The rupture disc 310 is connected to an inner circumference of the rupture score 307, and the rupture score 307 is arranged around an outer circumference of the rupture disc 310. During normal use of the battery, the rupture disc 310 is connected to the rupture score 307, such that as closed space is defined inside the battery cell, which is convenient for maintaining a stable electrochemical reaction environment. When the gas pressure inside the battery cell is greater than the explosion threshold of the explosion-proof valve 302, the rupture score 307 tears, the rupture disc 310 is disconnected from the rupture score 307, and the rupture disc 310 is opened to the outside of the battery cell under the impact of the gas inside the battery cell. In this way, the orientation of the gas flow is guided, and a small amount of electrolyte contained in the gas flow is prevented from splashing, thereby avoiding the corrosion of the battery structure.

In some embodiments, the reinforcement rib 308 and the rupture disc 310 are integrally formed. In this way, the strength of the connection between the reinforcement rib 308 and the rupture disc 310 is enhanced, such that the reinforcement rib 308 is not detached from the rupture disc 310 when the explosion-proof valve 302 is opened and the orientation of the gas flow is guided, which at least contributes to improving the safety of the battery.

In some embodiments, the rupture disc 310 may be a planar structure having a uniform thickness. An X-shaped or Y-shaped rupture reinforcement rib 308 may also be arranged on the rupture disc 310 to prevent the gas pressure inside the battery cell from causing the rupture disc 310 to deform, such that the rupture score 307 is prevented from being weakened due to the stress applied by the rupture disc 310, and the decrease of the rupture threshold is avoided. In this way, the safety performance of the battery is at least improved.

In some embodiments, referring to FIG. 11, the rupture disc 310 may further include an internal platform 311 and an external platform 312 arranged around an outer circumference of the internal platform 311. The external platform 312 is connected to the internal platform 311, and a thickness of the internal platform 311 is greater than a thickness of the external platform 312, such that the strength of the rupture disc 310 is increased, the deformation of the rupture disc 310 is prevented, the stress applied by the rupture disc 310 to the rupture score 307 is reduced, and hence changes of the exploration threshold of the rupture score 307 are avoided. In this way, the safety of the battery is improved.

In some embodiments, a thickness of the external platform 312 is greater than the thickness of the rupture score 307. In this way, the opening position of the explosion-proof valve 302 is precisely controlled at the rupture score 307, such that the problem that the opening position of the explosion-proof valve 302 is not definite is addressed, which is conducive to controlling the orientation of the gas ejected when the explosion-proof valve 302 is opened. In this way, the corrosion of the battery cell structure by a small amount of electrolyte contained in the ejected gas is prevented, which is conducive to improving the safety of the battery.

In some embodiments, the thickness of the internal platform 311 may be less than or equal to a thickness of the connection portion 309. In some other embodiments, the thickness of the internal platform 311 may also be greater than the thickness of the connection portion 309. The thickness of the internal platform 311 is subject by the fabrication process of the explosion-proof valve 302. For example, when the explosion-proof valve 302 is manufactured by an integral extrusion molding process, the material of some portions on the explosion-proof valve 302 may be extruded to the internal platform 311 due to a better plastic deformation capability of the material, such that the thickness of the internal platform 311 is greater than the thickness of the connection portion 309. In this way, the thickness of the rupture disc 310 is increased, and the strength of the rupture disc 310 is at least increased, which is conducive to avoiding easy deformation of the rupture disc 310. In this way, the safety of the battery is improved.

In some embodiments, referring to FIG. 12, the rupture disc 310 may further include a first inclined portion 313. The first inclined portion 313 is connected between the external platform 312 and the internal platform 311, and along a direction pointing from the external platform 312 to the internal platform 311, the thickness of the first inclined portion 311 progressively increases until the thickness of the first inclined portion 313 is equal to the thickness of the internal platform 311. The first inclined portion 313 forms a transition between the external platform 312 and the internal platform 311, such that the difficulty of manufacturing the explosion-proof valve 302 is lowered. In addition, the first inclined portion 313 also reduces the stress on the corner structure of the explosion-proof valve 302, which is conducive to avoiding damages due to an excessive concentration of the stress on the corner of the explosion-proof valve 302, and is conducive to improving the quality of the product.

In some embodiments, referring to FIG. 13, the first inclined portion 313 has a first inclined surface 33 and a bottom surface 34 that is opposite to the first inclined surface 33. The bottom surface 34 is a part of the lower surface 32. The first inclined surface 33 is connected to a surface of the internal platform 311 and a surface of the external platform 312, and an included angle defined between the first inclined surface 33 and a normal perpendicular to the bottom surface 34 may be in the range of 60° to 89°, for example, 60°, 75°, 85°, 89°, or the like. It should be understood that as long as the first inclined portion 313 functions to join the thickness of the external platform 312 to the thickness of the internal platform 311, the included angle defined between the first inclined surface 33 and the normal line perpendicular to the bottom surface 34 may be freely designed depending on different machining processes of the explosion-proof valve.

In some embodiments, referring to FIG. 14, the explosion-proof valve 302 may include a recessed portion 314. The recessed portion 314 is disposed in a central region of the rupture disc 310, and the recessed portion 314 is recessed from the upper surface 31 to the lower surface 32 of the explosion-proof valve 302, and the internal platform 311 is arranged around an outer circumference of the recessed portion 314. The process of forming the recessed portion 314 may include a stamping process, and a molded explosion-proof valve 302 is remachined with a press machine and a die. In the process of forming the explosion-proof valve 302, it is inevitable to produce an uneven surface on the explosion-proof valve 302, and the formation of the recessed portion 314 reduces the unevenness of the uneven surface on the explosion-proof valve 302 and obtain an explosion-proof valve 302 with better surface quality. In this way, the quality problems caused by an uneven stress on the explosion-proof valve 302 surface are addressed, which is conducive to improving the safety of the battery.

In some embodiments, a thickness of the recessed portion 314 may be greater than the thickness of the rupture score 307. In this way, the situation where the explosion-proof valve 302 is opened at the inner recess 314 and fails to be opened at the rupture score 307, or the situation where the explosion-proof valve 302 is opened at the recessed portion 314 and the rupture score 307 at the same time is avoided, which is conducive to controlling the position where the explosion-proof valve 302 is opened. In this way, the orientation of the gas flow flushing out from the battery cell when the explosion-proof valve 302 is opened is controlled, and a small amount of electrolyte carried out by the gas flow is prevented from corroding the structure of the battery cell.

In some embodiments, the thickness of the recessed portion 314 may be less than or equal to the thickness of the connection portion 309. In some other embodiments, the thickness of the recessed portion 314 may be greater than the thickness of the connection portion 309. Depending on different manufacture processes, the thickness of the recessed portion 314 may be freely designed. However, it should be understood that the thickness of the recessed portion 314 is less than the thickness of the internal platform 311 regardless of the fabrication process.

In some embodiments, referring to FIG. 15, the rupture disc 310 may further include a second inclined portion 315. The second inclined portion 315 is connected between the internal platform 311 and the recessed portion 314, and along a direction pointing from the internal platform 311 to the recessed portion 314, the thickness of the second inclined portion 315 progressively decreases. The second inclined portion 315 forms a transition between the recessed portion 314 and the internal platform 311, such that the difficulty of manufacturing the explosion-proof valve 302 is lowered. In addition, the second inclined portion 315 also reduces the stress on the corner structure of the explosion-proof valve 302, which is conducive to avoiding damages due to an excessive concentration of the stress on the corner of the explosion-proof valve 302, and is conducive to improving the quality of the product.

In some embodiments, referring to FIG. 16, the second inclined portion 315 has a second inclined surface 35 and a second bottom surface 36 opposite to the second inclined surface 35. The second bottom surface 36 is a part of the lower surface 32. The second inclined surface 35 is connected to the surface of the internal platform 311 and a surface of the recessed portion 314, and an included angle defined between the second inclined surface 35 and a normal perpendicular to the second bottom surface 36 may be less than or equal to 30°, for example, 30°, 28°, 15°, 9°, or the like. It should be understood that as long as the second inclined portion functions to join the thickness of the internal platform 311 to the thickness of the recessed portion 314, the included angle defined between the second inclined surface 35 and the normal line perpendicular to the second bottom surface 36 may be freely designed depending on different machining processes of the explosion-proof valve 302.

In some embodiments, referring to FIG. 17, the top cap 300 further includes a protective sheet 316. The protective sheet 316 is secured onto the aluminum sheet 301, and covers the explosion-proof hole 305 (as shown in FIG. 7). The protective sheet 316 is configured to protect the explosion-proof valve 302 (as shown in FIG. 7) from damages caused by foreign objects and avoid the situation where the explosion-proof valve 302 from is damaged and thus fails to be normally used, such that the explosion of the battery is prevented. In this way, the safety of the battery is at least improved. In addition, the protective sheet 316 may also be configured to block a small amount of electrolyte carried out by the gas ejected when the explosion-proof valve 302 is opened, such that the situation where the electrolyte is splashed on the negative post with the ejected gas and hence leakage of electricity of the battery cell is caused is avoided.

In some embodiments, the protective sheet 316 may be made of a transparent or semi-transparent material, such that the condition of the upper surface of the explosion-proof valve 302 is conveniently observed, which is conducive to discovering the damages of the explosion-proof valve 302 in time and taking measures to prevent the safety problems caused during use of the explosion-proof valve 302 in the damaged condition. In this way, the safety of the battery is improved.

In some embodiments, referring to FIG. 18 to FIG. 20, the protective sheet 316 may be composed of a gasket 317 and a protective sheet body 318. The protective sheet body 318 is fixed on the gasket 317 and covers the explosion-proof through hole 305 (as shown in FIG. 7), and the gasket 317 is fixed on the aluminum sheet 301 and surrounds the outer circumference of the explosion-proof through hole 305. As such, a specific region is defined such that the protective sheet 316 is secured to the aluminum sheet 301. In this way, standardization of the top cap is improved, the assembly efficiency is improved, and hence production efficiency is improved. In addition, the quality problems caused by insufficient alignment between the protective sheet 316 and the top cap during assembly are addressed, which is conducive to improving the safety of the battery. FIG. 19 is a schematic structural perspective view of a gasket according to some embodiments of the present disclosure. FIG. 20 is a schematic structural diagram of a protective sheet body according to some embodiments of the present disclosure.

In some embodiments, referring to FIG. 18, the protective sheet 316 is provided with an opening 320 running through the protective sheet 316 along a thicknesswise direction of the protective sheet 316. The opening 320 is to form a gas flow channel, so as to prevent the gas inside the battery cell from encountering an obstacle and being unable to be discharged when the explosion-proof valve is opened, and to prevent the battery cell from exploding due to the increase of internal pressure.

In some embodiments, the opening 302 is disposed in an edge region on a side, away from the liquid injection hole, of the protective sheet, such that residual electrolyte upon liquid injection from the liquid injection hole is prevented from entering a cavity between the protective sheet 316 and the explosion-proof valve 302 through the opening. In this way, the electrolyte is prevented from corroding the explosion-proof valve, such that the problem that the explosion-proof valve 302 fails to be normally used after being damaged is addressed.

In some embodiments, a distance from a tail end of the opening 320 to a center of the protective sheet 316 is less than a distance from an edge of the protective sheet 316 to the center of the protective sheet 316, such that the orientation and range of the gas ejected through the opening 320 are controlled, the damages to the battery structure caused by the ejected gas are reduced, and the safety of the battery is at least improved.

In some embodiments, the opening 320 may be in the shape of a circle. In some other embodiments, the opening 320 may be in the shape of a square. In some other embodiments, the opening 320 may be in the shape of a letter or a character. It should be understood that the function of the opening 320 is to achieve gas communication between the cavity formed by the protection sheet 316 and the explosion-proof valve 302, and the external environment, such that the opening 320 can be designed to a variety of shapes.

In some embodiments, the opening 320 is located in the edge region of the protective sheet 316 away from the negative post hole and the negative post corresponding to the negative post hole, which is conducive to avoiding the electricity leakage of the negative post caused by the electrolyte spraying through the opening 320 and splashing onto the negative post, and sparks caused by the electricity leakage can be avoided, so as to improve the safety of the battery.

In some embodiments, a width of the opening 320 within the protective sheet 316 is within 1 mm along a direction being perpendicular to a direction from the opening pointing to the center of the protective sheet. For example, when the opening 320 is in the shape of a rectangle with short sides facing towards the center of the protective sheet 316, a length of the short sides may be 0.1 mm, 0.2 mm, 0.5 mm, 1 mm, or the like. In this way, it is possible to prevent foreign objects from entering the cavity formed by the protective sheet 316 and the explosion-proof valve due 302 to an excessive width of the opening 302, such that the situation where the explosion-proof valve 302 fails to be normally used due to damages caused by the foreign objects or corrosion of the explosion-proof valve 302 is avoided, which is conducive to improving the safety of the battery.

Referring to FIG. 21, in some embodiments, the top cap 300 may further include structures such as a positive upper plastic member 321, a negative upper plastic member 322, a positive sealing ring 323, a negative sealing ring 324, a bottom plastic structure 325, a positive post 326, or a negative post 327.

FIG. 22 is a schematic diagram of an assembled structure of a top cap 300 and a housing 400 of a battery cell in accordance with some embodiments of the present disclosure, and the top cap 300 is mounted on the top of the cell housing 400.

The top cap 300 according to the above embodiments of the present disclosure includes an aluminum sheet 301 and an explosion-proof valve 302. The aluminum sheet 301 is a main portion of the top cap 300, and is configured to seal a battery cell. The aluminum sheet 301 is provided with a positive post hole 303, a negative post hole 304, and an explosion-proof hole 305 that all run through the aluminum sheet 301 along a thicknesswise direction. The positive post hole 303 is configured to allow a positive post to run through, such that the positive post is connected to the inside of the battery cell and an electricity usage environment outside a battery. The negative post hole 304 is configured to allow a negative post to run through, such that the negative post is connected to the inside of the battery cell and the electricity usage environment outside the battery. The explosion-proof hole 305 is configured to secure the explosion-proof valve 302, such that gas inside the battery cell is discharged when the explosion-proof valve 302 is opened. The positive post hole 303 and the negative post hole 304 are disposed at two different orientations of the explosion-proof hole 305 respectively to prevent confusion between the positive and negative posts. The explosion-proof valve 302 is secured onto the aluminum sheet 301 to cover the explosion-proof hole 305. The explosion-proof valve 302 has an upper surface 31 and a lower surface 32 that are opposite to each other. The upper surface 31 of the explosion-proof valve 302 faces towards the explosion-proof hole 305. The explosion-proof valve 302 functions to seal the battery cell during normal use of the battery cell, such that leakage of the electrolyte inside the battery cell is prevented. The explosion-proof valve 302 includes a rupture score 307 and a reinforcement rib 308. The rupture score 307 is a dent recessed from the upper surface 31 towards the lower surface 32, and the rupture score 307 is a weak portion on the explosion-proof valve 302, which ruptures when the gas pressure inside the battery cell is greater than the explosion threshold of the explosion-proof valve 302, such that a notch for discharging the gas is formed in the explosion-proof valve 302, and hence the gas pressure is balanced inside and outside the battery cell and explosion of the battery cell is prevented. The reinforcement rib 308 is disposed in a partial region of the dent to avoid complete tear of the rupture score 307 and thereby control the orientation of the ejected gas. A distance between the reinforcement rib 308 and the negative post hole 304 is less than a distance between the reinforcement rib 308 and the positive post hole 303, such that the ejected gas is prevented from being ejected towards the negative post hole 304 and the negative post corresponding to the negative post hole 304. In this way, a small amount of electrolyte carried out by the ejected gas is prevented from being in contact with the negative post, and hence leakage of electricity of the negative post is prevented, which is at least conducive to improving the safety performance of the battery.

It should be noted that in the embodiments provided as shown in FIG. 1 to FIG. 6 and the embodiments provided in FIG. 7 to FIG. 22, similar elements may use different terminology, e.g., the fourth post hole 230 and the positive post hole 303, and the third post hole 230 and the negative post hole 304, but are similar in location and function, respectively, and the details of the respective embodiments may be implemented in conjunction with each other without conflict.

" The bottom plastic structure of the top cap and the top cap of the battery cell" provided in the embodiments of the present disclosure are described in detail above, and the principles and implementation methods of the embodiments of the present disclosure have been described in this document by applying specific examples, and the description of the above embodiments is only used to assist in the understanding of the concepts of the embodiments of the present disclosure, and there may be changes in the specific implementations and the application scope of the present disclosure. In summary, the contents of this document should not be construed as a limitation on the embodiments of the present disclosure.

## Claims

1. A top cap of a battery cell, comprising:
an aluminum sheet (20, 301); and
a bottom plastic structure (10), wherein a top side of the bottom plastic structure is arranged on a bottom side of the aluminum sheet (20, 301);
wherein the bottom plastic structure (10) includes a first plate (110), a second plate (120), and an intermediate protrusion (130) disposed between the first plate (110) and the second plate (120), and the intermediate protrusion (130) is protruded with respect to the first plate (110) and the second plate (120) on a bottom side of the bottom plastic structure (10);
wherein the first plate (110) is provided with a first post hole (111), the second plate (120) is provided with a first liquid injection hole (121), a second post hole (122) and a stop portion (140);
the stop portion (140) is disposed at the bottom side of the bottom plastic structure (10), protrudes outwardly from a circumference of the first liquid injection hole (121), and is of a hollowed-out structure;
an area of a hollowed-out region of the stop portion (140) is greater than an area of a cross-section of the first liquid injection hole (121); and
wherein the stop portion (140) includes a side surface (141) and a bottom surface (142), the side surface (141) is in contact with the bottom side of the second plate (120) and surrounds a circumference of the first liquid injection hole (121), and the side surface (141) extends along a direction away from the second plate (120) and is in connection with the bottom surface (142);
a plurality of diverging holes (1411) are provided on the side surface (141) and are uniformly spaced apart from each other along a circumference of the stop portion (140), and **characterized in that** a total area of the plurality of diverging holes (1411) is greater than the area of the cross-section of the first liquid injection hole (121).

2. The top cap according to claim 1, wherein the first plate (110) and the second plate (120) is provided with side-end protrusions (150) on two opposite sides of the first plate (110) and the second plate (120), respectively, one of the side-end protrusions (150) is protruded from the bottom side of the first plate (110) and another of the side-end protrusions (150) is protruded from the bottom side of the second plate (120), and each of the side-end protrusions (150) is provided with a plurality of holes (151).

3. The top cap according to claim 2, wherein each of the side-end protrusions (150) is of a frame structure, and is provided with a plurality of reinforcement ribs (152) extending along a lengthwise direction of the bottom plastic structure (10).

4. The top cap according to any one of claims 1 to 3, further comprising a sealing rivet (30); wherein the aluminum sheet (20) is provided with a second liquid injection hole (210) having a same central axis as the first liquid injection hole (121), the sealing rivet (30) is inserted into the second liquid injection hole (210), and a gap between a bottom end of the sealing rivet (30) and a bottom of the stop portion (140) is set in a range of 0.5 mm to 2 mm.

5. The top cap according to claim 4, wherein the second liquid injection hole (210) is a stepped hole including a first hole section (211) and a second hole section (212), the first hole section (211) has a radial dimension greater than a radial dimension of the second hole section (212), and the second hole section (212) is closer to the first liquid injection hole (121) than the first hole section (211).

6. The top cap according to any one of claims 1 to 5, further comprising an explosion-proof valve (40, 302);
wherein the intermediate protrusion (130) is provided with a plurality of vent holes (131), the explosion-proof valve (40, 302) is mounted on a back surface of the intermediate protrusion (130), and is directly aligned with the plurality of vent holes (131).

7. The top cap according to claim 6, wherein the intermediate protrusion (130) is rectangular, each of the plurality of vent holes (131) is strip-shaped and extends along the widthwise direction Y of the bottom plastic structure (10), and the plurality of vent holes (131) are uniformly spaced apart from each other.

8. The top cap according to claim 6 or claim 7, further comprising catch slots (132), respectively disposed at two sides of the intermediate protrusion (130) that connect the first plate (110) and the second plate (120);
wherein the explosion-proof valve (40, 302) is clamped into the catch slots (132), and each of the catch slot (132) has a depression depth less than a protrusion height of the intermediate protrusion (130).

9. The top cap according to any one of claims 1 to 8, wherein the plurality of diverging holes (1411) are in the shape of a trapezoid, rectangle, triangle depending on the shape of the side surface (141);
optionally, wherein the plurality of diverging holes (1411) are trapezoidal holes and the stop portion (140) is bowl-shaped.

10. The top cap according to claim 8, wherein the depression depth of the catch slot (132) is equal to the thickness of the explosion-proof valve (40, 302).

11. The top cap according to claim 8, wherein the catch slots (132) are arranged at a middle position of the intermediate protrusion (130) along the widthwise direction Y of the bottom plastic structure (10).

12. The top cap according to claim 8, wherein the catch slots (132) are arranged at positions close to the two sides of the intermediate protrusion (130) along the widthwise direction Y of the bottom plastic structure (10).

13. The top cap according to claim 6 or claim 7, wherein the size of the vent hole (131) along a lengthwise direction X of the bottom plastic structure (10) is less than the size of a rupture disc (310) of the explosion-proof valve (40, 302).

14. The top cap according to claim 6 or claim 7, wherein the explosion-proof valve (40, 302) further includes a rupture disc (310) and a recessed portion (314);
the recessed portion (314) is disposed in a central region of the rupture disc (310), and is recessed from an upper surface (31) to the lower surface (32) of the explosion-proof valve (40, 302), and an internal platform (311) is arranged around an outer circumference of the recessed portion (314).

15. A battery cell, comprising:
the top cap (300) according to any one of claims 1 to 14; and
a housing (400);
wherein the top cap (300) is mounted on a top of the housing (400).

## Patentansprüche

1. Oberkappe einer Batteriezelle, umfassend:
ein Aluminiumblech (20, 301); und
eine untere Kunststoffstruktur (10), wobei eine Oberseite der unteren Kunststoffstruktur an einer Unterseite des Aluminiumblechs (20, 301) angeordnet ist;
wobei die untere Kunststoffstruktur (10) eine erste Platte (110), eine zweite Platte (120) und einen Zwischenvorsprung (130) aufweist, der zwischen der ersten Platte (110) und der zweiten Platte (120) angeordnet ist, und der Zwischenvorsprung (130) in Bezug auf die erste Platte (110) und die zweite Platte (120) an einer Unterseite der unteren Kunststoffstruktur (10) vorsteht;
wobei die erste Platte (110) mit einem ersten Polloch (111) versehen ist, die zweite Platte (120) mit einem ersten Flüssigkeitseinspritzloch (121), einem zweiten Polloch (122) und einem Anschlagabschnitt (140) versehen ist;
der Anschlagabschnitt (140) an der Unterseite der unteren Kunststoffstruktur (10) angeordnet ist, von einem Umfang des ersten Flüssigkeitseinspritzlochs (121) nach außen vorsteht und von ausgehöhlter Struktur ist;
eine Fläche eines ausgehöhlten Bereichs des Anschlagabschnitts (140) größer ist als eine Fläche eines Querschnitts des ersten Flüssigkeitseinspritzlochs (121); und
wobei der Anschlagabschnitt (140) eine Seitenfläche (141) und eine Bodenfläche (142) aufweist, die Seitenfläche (141) mit der Unterseite der zweiten Platte (120) in Kontakt steht und einen Umfang des ersten Flüssigkeitseinspritzlochs (121) umgibt, und sich die Seitenfläche (141) entlang einer Richtung weg von der zweiten Platte (120) erstreckt und mit der Bodenfläche (142) in Verbindung steht;
eine Mehrzahl von divergierenden Löchern (1411) an der Seitenfläche (141) vorgesehen und entlang eines Umfangs des Anschlagabschnitts (140) gleichmäßig voneinander beabstandet sind, und **dadurch gekennzeichnet, dass** eine Gesamtfläche der Mehrzahl von divergierenden Löchern (1411) größer ist als die Fläche des Querschnitts des ersten Flüssigkeitseinspritzlochs (121).

2. Oberkappe nach Anspruch 1, wobei die erste Platte (110) und die zweite Platte (120) mit seitlichen Endvorsprüngen (150) an zwei gegenüberliegenden Seiten der ersten Platte (110) bzw. der zweiten Platte (120) versehen sind, wobei einer der seitlichen Endvorsprünge (150) von der Unterseite der ersten Platte (110) vorsteht und ein anderer der seitlichen Endvorsprünge (150) von der Unterseite der zweiten Platte (120) vorsteht, und jeder der seitlichen Endvorsprünge (150) mit einer Mehrzahl von Löchern (151) versehen ist.

3. Oberkappe nach Anspruch 2, wobei jeder der seitlichen Endvorsprünge (150) eine Rahmenstruktur aufweist und mit einer Mehrzahl von Verstärkungsrippen (152) versehen ist, die sich entlang einer Längsrichtung der unteren Kunststoffstruktur (10) erstrecken.

4. Oberkappe nach einem der Ansprüche 1 bis 3, ferner umfassend einen Dichtniet (30);
wobei das Aluminiumblech (20) mit einem zweiten Flüssigkeitseinspritzloch (210) versehen ist, das dieselbe Mittelachse wie das erste Flüssigkeitseinspritzloch (121) aufweist, der Dichtniet (30) in das zweite Flüssigkeitseinspritzloch (210) eingesetzt ist und ein Spalt zwischen einem unteren Ende des Dichtniets (30) und einem Boden des Anschlagabschnitts (140) in einem Bereich von 0,5 mm bis 2 mm festgelegt ist.

5. Oberkappe nach Anspruch 4, wobei das zweite Flüssigkeitseinspritzloch (210) ein Stufenloch ist, das einen ersten Lochabschnitt (211) und einen zweiten Lochabschnitt (212) umfasst, der erste Lochabschnitt (211) eine radiale Abmessung aufweist, die größer ist als eine radiale Abmessung des zweiten Lochabschnitts (212), und der zweite Lochabschnitt (212) näher an dem ersten Flüssigkeitseinspritzloch (121) liegt als der erste Lochabschnitt (211).

6. Oberkappe nach einem der Ansprüche 1 bis 5, ferner umfassend ein Explosionsschutzventil (40, 302);
wobei der Zwischenvorsprung (130) mit einer Mehrzahl von Entlüftungslöchern (131) versehen ist, das Explosionsschutzventil (40, 302) an einer Rückfläche des Zwischenvorsprungs (130) montiert ist und direkt auf die Mehrzahl von Entlüftungslöchern (131) ausgerichtet ist.

7. Oberkappe nach Anspruch 6, wobei der Zwischenvorsprung (130) rechteckig ist, jedes der Mehrzahl von Entlüftungslöchern (131) streifenförmig ist und sich entlang der Breitenrichtung Y der unteren Kunststoffstruktur (10) erstreckt, und die Mehrzahl von Entlüftungslöchern (131) gleichmäßig voneinander beabstandet ist.

8. Oberkappe nach Anspruch 6 oder Anspruch 7, ferner umfassend Rastschlitze (132), die jeweils an zwei Seiten des Zwischenvorsprungs (130) angeordnet sind, die die erste Platte (110) und die zweite Platte (120) verbinden;
wobei das Explosionsschutzventil (40, 302) in die Rastschlitze (132) eingeklemmt ist und jeder Rastschlitz (132) eine Vertiefungstiefe aufweist, die kleiner ist als eine Vorsprunghöhe des Zwischenvorsprungs (130).

9. Oberkappe nach einem der Ansprüche 1 bis 8, wobei die Mehrzahl von divergierenden Löchern (1411) in Abhängigkeit von der Form der Seitenfläche (141) die Form eines Trapezes, Rechtecks, Dreiecks aufweist;
gegebenenfalls, wobei die Mehrzahl von divergierenden Löchern (1411) trapezförmige Löcher sind und der Anschlagabschnitt (140) schalenförmig ist.

10. Oberkappe nach Anspruch 8, wobei die Vertiefungstiefe des Rastschlitzes (132) gleich der Dicke des Explosionsschutzventils (40, 302) ist.

11. Oberkappe nach Anspruch 8, wobei die Rastschlitze (132) an einer mittleren Position des Zwischenvorsprungs (130) entlang der Breitenrichtung Y der unteren Kunststoffstruktur (10) angeordnet sind.

12. Oberkappe nach Anspruch 8, wobei die Rastschlitze (132) an Positionen nahe den beiden Seiten des Zwischenvorsprungs (130) entlang der Breitenrichtung Y der unteren Kunststoffstruktur (10) angeordnet sind.

13. Oberkappe nach Anspruch 6 oder Anspruch 7, wobei die Größe des Entlüftungslochs (131) entlang einer Längsrichtung X der unteren Kunststoffstruktur (10) kleiner ist als die Größe einer Berstscheibe (310) des Explosionsschutzventils (40, 302).

14. Oberkappe nach Anspruch 6 oder Anspruch 7, wobei das Explosionsschutzventil (40, 302) ferner eine Berstscheibe (310) und einen vertieften Abschnitt (314) aufweist;
der vertiefte Abschnitt (314) in einem mittleren Bereich der Berstscheibe (310) angeordnet ist und von einer oberen Oberfläche (31) zu der unteren Oberfläche (32) des Explosionsschutzventils (40, 302) vertieft ist, und eine innere Plattform (311) um einen Außenumfang des vertieften Abschnitts (314) herum angeordnet ist.

15. Batteriezelle, umfassend:
die Oberkappe (300) nach einem der Ansprüche 1 bis 14; und
ein Gehäuse (400);
wobei die Oberkappe (300) an einer Oberseite des Gehäuses (400) montiert ist.

## Revendications

1. Capuchon supérieur d'une cellule de batterie, comprenant :
une feuille d'aluminium (20, 301) ; et
une structure inférieure en plastique (10), dans laquelle un côté supérieur de la structure inférieure en plastique est agencé sur un côté inférieur de la feuille d'aluminium (20, 301) ;
dans lequel la structure inférieure en plastique (10) comprend une première plaque (110), une seconde plaque (120) et une saillie intermédiaire (130) disposée entre la première plaque (110) et la seconde plaque (120), et la saillie intermédiaire (130) fait saillie par rapport à la première plaque (110) et à la seconde plaque (120) sur un côté inférieur de la structure inférieure en plastique (10) ;
dans lequel la première plaque (110) est pourvue d'un premier trou de borne (111), la seconde plaque (120) est pourvue d'un premier trou d'injection de liquide (121), d'un second trou de borne (122) et d'une portion d'arrêt (140) ;
la portion d'arrêt (140) est disposée au niveau du côté inférieur de la structure inférieure en plastique (10), fait saillie vers l'extérieur depuis une circonférence du premier trou d'injection de liquide (121), et est d'une structure évidée ;
une aire d'une zone évidée de la portion d'arrêt (140) est supérieure à une aire d'une section transversale du premier trou d'injection de liquide (121) ; et
dans lequel la portion d'arrêt (140) comprend une surface latérale (141) et une surface de fond (142), la surface latérale (141) est en contact avec le côté inférieur de la seconde plaque (120) et entoure une circonférence du premier trou d'injection de liquide (121), et la surface latérale (141) s'étend le long d'une direction s'éloignant de la seconde plaque (120) et est reliée à la surface de fond (142) ;
une pluralité de trous divergents (1411) sont pratiqués sur la surface latérale (141) et sont espacés uniformément les uns des autres le long d'une circonférence de la portion d'arrêt (140), et **caractérisé en ce qu'**une aire totale de la pluralité de trous divergents (1411) est supérieure à l'aire de la section transversale du premier trou d'injection de liquide (121).

2. Capuchon supérieur selon la revendication 1, dans lequel la première plaque (110) et la seconde plaque (120) sont pourvues de saillies d'extrémité latérale (150) sur deux côtés opposés de la première plaque (110) et de la seconde plaque (120), respectivement, l'une des saillies d'extrémité latérale (150) fait saillie depuis le côté inférieur de la première plaque (110) et une autre des saillies d'extrémité latérale (150) fait saillie depuis le côté inférieur de la seconde plaque (120), et chacune des saillies d'extrémité latérale (150) est pourvue d'une pluralité de trous (151).

3. Capuchon supérieur selon la revendication 2, dans lequel chacune des saillies d'extrémité latérale (150) est d'une structure de cadre, et est pourvue d'une pluralité de nervures de renforcement (152) s'étendant le long d'une direction longitudinale de la structure inférieure en plastique (10).

4. Capuchon supérieur selon l'une quelconque des revendications 1 à 3, comprenant en outre un rivet d'étanchéité (30) ;
dans lequel la feuille d'aluminium (20) est pourvue d'un second trou d'injection de liquide (210) ayant un même axe central que le premier trou d'injection de liquide (121), le rivet d'étanchéité (30) est inséré dans le second trou d'injection de liquide (210), et un espace entre une extrémité inférieure du rivet d'étanchéité (30) et un fond de la portion d'arrêt (140) est établi dans une plage de 0,5 mm à 2 mm.

5. Capuchon supérieur selon la revendication 4, dans lequel le second trou d'injection de liquide (210) est un trou étagé comprenant une première section de trou (211) et une seconde section de trou (212), la première section de trou (211) a une dimension radiale supérieure à une dimension radiale de la seconde section de trou (212), et la seconde section de trou (212) est plus proche du premier trou d'injection de liquide (121) que la première section de trou (211).

6. Capuchon supérieur selon l'une quelconque des revendications 1 à 5, comprenant en outre une soupape anti-explosion (40, 302) ;
dans lequel la saillie intermédiaire (130) est pourvue d'une pluralité de trous d'évent (131), la soupape anti-explosion (40, 302) est montée sur une surface arrière de la saillie intermédiaire (130), et est directement alignée avec la pluralité de trous d'évent (131).

7. Capuchon supérieur selon la revendication 6, dans lequel la saillie intermédiaire (130) est rectangulaire, chacun de la pluralité de trous d'évent (131) est en forme de bande et s'étend le long de la direction de la largeur Y de la structure inférieure en plastique (10), et les trous de la pluralité de trous d'évent (131) sont espacés uniformément les uns des autres.

8. Capuchon supérieur selon la revendication 6 ou la revendication 7, comprenant en outre des fentes d'accrochage (132), respectivement disposées de deux côtés de la saillie intermédiaire (130) qui relient la première plaque (110) et la seconde plaque (120) ;
dans lequel la soupape anti-explosion (40, 302) est serrée dans les fentes d'accrochage (132), et chaque fente d'accrochage (132) a une profondeur d'enfoncement inférieure à une hauteur de saillie de la saillie intermédiaire (130).

9. Capuchon supérieur selon l'une quelconque des revendications 1 à 8, dans lequel la pluralité de trous divergents (1411) ont la forme d'un trapèze, d'un rectangle, d'un triangle en fonction de la forme de la surface latérale (141) ;
éventuellement, dans lequel la pluralité de trous divergents (1411) sont des trous trapézoïdaux et la portion d'arrêt (140) est en forme de bol.

10. Capuchon supérieur selon la revendication 8, dans lequel la profondeur d'enfoncement de la fente d'accrochage (132) est égale à l'épaisseur de la soupape anti-explosion (40, 302).

11. Capuchon supérieur selon la revendication 8, dans lequel les fentes d'accrochage (132) sont agencées en une position médiane de la saillie intermédiaire (130) le long de la direction de la largeur Y de la structure inférieure en plastique (10).

12. Capuchon supérieur selon la revendication 8, dans lequel les fentes d'accrochage (132) sont agencées en des positions proches des deux côtés de la saillie intermédiaire (130) le long de la direction de la largeur Y de la structure inférieure en plastique (10).

13. Capuchon supérieur selon la revendication 6 ou la revendication 7, dans lequel la taille du trou d'évent (131) le long d'une direction de la longueur X de la structure inférieure en plastique (10) est inférieure à la taille d'un disque de rupture (310) de la soupape anti-explosion (40, 302).

14. Capuchon supérieur selon la revendication 6 ou la revendication 7, dans lequel la soupape anti-explosion (40, 302) comprend en outre un disque de rupture (310) et une partie en retrait (314) ;
la partie en retrait (314) est disposée dans une région centrale du disque de rupture (310), et est en retrait depuis une surface supérieure (31) jusqu'à la surface inférieure (32) de la soupape anti-explosion (40, 302), et une plateforme interne (311) est agencée autour d'une circonférence extérieure de la partie en retrait (314).

15. Cellule de batterie, comprenant :
le capuchon supérieur (300) selon l'une quelconque des revendications 1 à 14 ; et
un boîtier (400) ;
dans lequel le capuchon supérieur (300) est monté sur un dessus du boîtier (400).
